# EUROPÄISCHE PATENTANMELDUNG

(11) **EP 1 947 411 A1**
(43) Veröffentlichungstag der Anmeldung: **23.07.2008**
(21) Anmeldenummer: 08450003.2
(22) Anmeldetag: 17.01.2008
(51) Int. Cl.: F28D 20/02, A62C 2/06

(54) **Energiesparendes Bauelement**

(30) Priorität: 18.01.2007 US 880945 P
(71) Anmelder: Horwath, Tibor G., Fredericksburg VA 22406 (US); Kolouch, Sylvia, 8010 Graz (AT)
(72) Erfinder: Horwath, Tibor G., Fredericksburg, VA 22406 (US)
(74) Vertreter: Schwarz, Albin

(57) **Zusammenfassung**

Die hier beschriebene Erfindung stellt verschiedene Ausführungen eines Bauelements, welches hohe Wärmeisolierung und hohe Wärmeenergiespeicherung für den Gebrauch in Wohn- und industriellem Bau aufweist, zur Verfügung. Es ist basiert auf latenter Wärmespeicherung durch Phasenwechseln von bestimmten Materialien in einem Temperaturbereich der der Raumtemperatur entspricht. Das Bauelement kann in Matten verpackt werden die den zur Verpackung von empfindlichen und zerbrechlichen Gegenständen verwendeten Folien mit Luftkammern (bekannt als bubble wrap) ähneln. Darüber hinaus kann das Bauelement feuerbeständig gemacht werden. In seinem einfachsten Ausführung kann es wesentliche Energieeinsparungen für Heizung und Kühlung bewirken wenn es in die Wände, Decken und Böden von Gebäuden eingebaut wird. Durch die Integration des Materials mit geothermischen Wärmepumpen und Solarkollektoren können diese Energieeinsparungen für Heizung und Kühlung bis zu 80 Prozent, verglichen mit konventionellen Bauweisen, gesteigert werden.

## Beschreibung

Die vorliegende Erfindung betrifft ein Bauelement, das in Baumaterialien, besonders in Baumaterialien mit hoher Wärmeisolierung und hoher Energiespeicherung, z.B. in Baumaterialien, die in Gebäuden mit geothermischer und/oder Solarheizung und Kühlung verwendet werden kann.

Die Energieeffizienz in Gebäuden hängt in erster Linie von zwei materiellen Parametern der äußeren Wände ab. Der eine Parameter ist der thermische Widerstand oder die thermische Leitfähigkeit des Materials, die durch die R-Nummer oder k-Nummer charakterisiert ist. Dieser Parameter wird auch als Wärmeisolierung bezeichnet, die, sowohl für Heizung als auch Kühlung, den Wärmefluss durch die Wände des Gebäudes bestimmt und,weitergehend, den jeweiligen Energiebedarf für das Aufrechterhalten der gewünschten Innentemperatur bei verschiedenen Außentemperaturbedingungen.

Der andere Parameter ist die Wärmespeicherkapazität des Materials. Diese beeinflusst, in welchem Maße die Innentemperatur, ohne Heizung oder Kühlung, den äußeren Temperaturschwankungen folgt. Die Wärmespeicherkapazität oder "thermische Masse" steht normalerweise mit der physikalischen Masse des Materials im Zusammenhang, weshalb Gebäude mit dicken Außenwänden stabilere Temperaturbedingungen im Inneren aufweisen als Gebäude aus leichten Materialien.

Neue Fortschritte in der Materialtechnik haben die Herstellung von Materialien ermöglicht, die in den interessanten Temperaturbereichen bis zu hundertmal mehr Wärme pro Masseneinheit speichern können, als konventionelle Materialien. Zusätzlich zu der im Material gespeicherten normalen Wärme, ist latente Wärme durch einen Phasenübergang des Materials gespeichert. Solche Phasenänderungsmaterialien (PCMs) sind für ein breites Spektrum von Phasenwechseltemperaturen verfügbar und sind mit niedrigem Gewicht und niedrigen Kosten herstellbar. Kombiniert mit Wärmeisoliermaterialien in entsprechender Anordnung, können sie sowohl zur Wärmeisolierung als auch zur Wärmespeicherung verwendet werden.

Ein Maß der Qualität solcher kombinierten Materialien ist die thermische Zeitkonstante, das ist jene Zeit, für die die innere Temperatur des Materials unverändert bleibt, wenn außen ein Temperaturunterschied von einem Grad Celsius auftritt. Der Wert dieser Zeitkonstante für eine vorliegende Materialkombination hängt von den Eigenschaften des Wärmespeichermaterials, den Eigenschaften des Isoliermaterials und deren Dimensionen in der Richtung des Wärmeflusses ab. Die Werte der Zeitkonstanten werden maximiert, wenn die Dicken der Materialien gleich sind.

Hohe Isolierungseigenschaften des Wandmaterials, wie auch hohe Wärmespeicherkapazität sind für eine gesteigerte Energieeffizienz wünschenswert, sind aber mit konventionellen Baustoffen, Methoden und Praktiken kaum zu erreichen. Da eine Begrenzung der Menge der Baumaterialien auf das strukturell erforderliche Minimum vom Standpunkt der Kostensenkung wünschenswert ist, sind massive Wandstrukturen, die aufgrund ihrer Masse für die Speicherung von großen Mengen Wärme geeignet sein können, wirtschaftlich nicht praktikabel.

Herkömmliche Baumaterialien mit hoher thermischer Masse, wie Mauerwerk, besitzen in der Regel niedrige Wärmeisolierungseigenschaften. Während die Wärmeisolierung durch die Anwendung von zusätzlichen Isolierschichten verbessert werden kann, kann die thermische Masse aufgrund der Wärmespeichereigenschaften des Materials, nur durch massivere Wandstrukturen gesteigert werden. Da konventionelle Methoden keine Synergien bei der Anwendung von geothermischen Wärmepumpen, Solarenergie und energiespeichernden Phasenänderungsmaterialien ausnützen, entstehen dadurch hohe Installations- und Betriebskosten.

Es wurde nun überraschend ein Bauelement für den Bau von Wohn- und öffentlichen Gebäuden mit hoher Wärmespeicherung gefunden, das in Wände, Decken und Böden von Gebäuden eingebaut werden kann, wo es die latente Wärme in den Phasenübergang eines Speichermateriales speichern und dadurch die thermische Masse des Gebäudes wirksam steigern kann, ohne dass massivere Baustrukturen notwendig sind. Die Wärmespeicherung und -abgabe findet über den größten Teil des Tages statt, was ausgleichend wirkt und gleichzeitig den Energiebedarf für Heizung und Kühlung reduziert. Das Bauelement kann z.B. in das Klimasystem eines Gebäudes integriert werden, z.B. in Verbindung mit einer Erdwärmepumpe, wodurch unter günstigen Umständen Energieeinsparungen bis zu 80 Prozent möglich sind. Das Bauelement ist weiterhin von geringen Kosten, leicht herzustellen und seine konstituierenden Bestandteile sind umweltfreundlich.

Gemäß vorliegender Erfindung wird
- Energiespeicherung für Wohn- und kommerzielle Gebäude,
- Energiespeicherung für den Bau von Wohn- und kommerziellen Gebäuden,
- Energiespeicherung zum Nachrüsten von Wohn- und kommerziellen Gebäuden,
- Energiespeicherung zum Nachrüsten von Wohn- und kommerziellen Gebäude, das Phasenänderungsmaterialien benutzt,
- Energiespeicherung umweltverträglicher und latenter Wärmeenergie zum Nachrüsten von Wohn- und kommerziellen Gebäuden,
- eine (flexible) Matte mit einzelnen Hohlräumen (Zellen), die mit Phasenänderungsmaterial (PCM) gefüllt sind, z.B. zur Energiespeicherung für den Bau und zum Nachrüsten von Wohn- und kommerziellen Gebäuden, z.B. wobei die Matte aus einer Folie mit Luftkammern (bubble wrapp) besteht,
- Energiespeicherung zum Bau und zum Nachrüsten für Wohn- und kommerzielle Gebäuden in Form einer (flexiblen) Matte mit einzelnen Hohlräumen (Zellen) die mit Phasenänderungsmaterial (PCM) gefüllt sind, wobei einzelne Hohlräume (Zellen) feuerlöschendes Material enthalten,
- Energiespeicherung zum Bau und zum Nachrüsten für Wohn- und kommerzielle Gebäude, die in Gebäuden, die mit Heiz- und/oder Kühlsystemen für Böden, Decke und Wände ausgestattet sind, integriert sein kann,
zur Verfügung gestellt.

In einem Aspekt stellt die vorliegende Erfindung ein Behältnis aus einem Material das Hohlräume enthält, zur Verfügung, welches dadurch gekennzeichnet ist, dass die Hohlräume mit einem Phasenänderungsmaterial gefüllt und mit einer Deckschicht verschlossen sind.

Dieses Behältnis wird hierin auch als "Behältnis(se) gemäß (der) vorliegenden Erfindung" bezeichnet.

Ein Behältnis gemäß vorliegender Erfindung ist als Bauelement verwendbar und schliesst Folien, wie Matten und Bleche ein.

Bevorzugt ist ein Behältnis in der Form einer Luftpolsterfolie (bubble wrapp), in der den Luftkammern entsprechende Hohlräume mit einem Phasenänderungsmaterial (PCM) gefüllt und mit einer Deckschicht verschlossen sind.

Ein Behältnis gemäß vorliegender Erfindung kann in Form einer, beispielsweise flexiblen, Matte ausgestaltet sein. Eine Matte gemäß vorliegender Erfindung kann eine beliebige Breite aufweisen, beispielsweise eine Breite von etwa 50 bis 60 cm. Eine Matte gemäß vorliegender Erfindung kann als Endlosrolle hergestellt sein.

Ein Behältnis gemäß vorliegender Erfindung stellt ein energiespeicherndes Behältnis dar.
In einem Behältnis gemäß vorliegender Erfindung müssen nicht unbedingt alle Hohlräume gefüllt sein.

Die Hohlräume können ein Material enthalten, welches das Phasenänderungsmaterial in flüssiger Form aufgesaugt hält, damit kein Material bei Beschädigung der Hülle austreten kann, beispielsweise ein saugendes Material, wie beispielsweise einen Schwamm.

Material das Hohlräume enthält, gemäß vorliegender Erfindung, schliesst Kunstoff, z.B. weichen bis harten Kunstoff, Metall oder Verbundstoff, bevorzugt Kunstoff oder Metall ein.

Phasenänderungsmaterial (PCM) gemäß vorliegender Erfindung ist bekannt und schließt Phasenänderungsmaterial ein, das durch Phasenwechseln bestimmter Materialien latent Wärme speichert, bevorzugt in einem Temperaturbereich, der der Raumtemperatur entspricht, etwa eine Temperatur von 20 bis 35 °C.

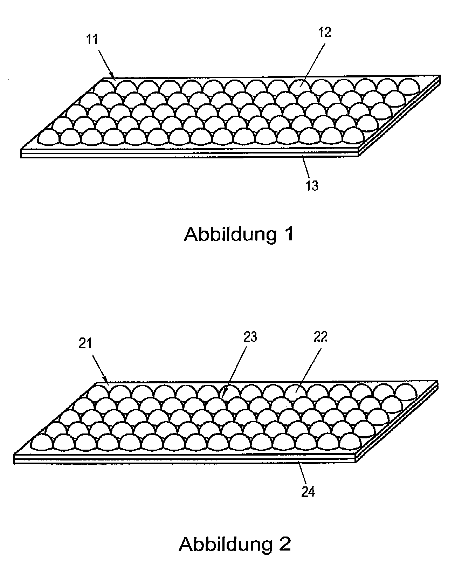

In einer besonderen Ausführungsform stellt die vorliegende Erfindung ein Behältnis gemäß vorliegender Erfindung zur Verfügung, das aus einer flachen Deckschicht (13) und einer Trägerschicht mit Hohlräumen (11), die ein Phasenänderungsmaterial (12) enthalten, besteht; z.B. wie in Abbildung 1 beschrieben und gezeigt.

In einer bevorzugten Ausführungsform ist das Behältnis eine energiespeichernde Matte (10), ähnlich wie in Abbildung 1 beschrieben, die dem bekannten Verpackungs- und Lieferungsmaterial für empfindliche und zerbrechliche Gegenstände ähnlich ist, die als "bubble wrapp" (Luftpolsterfolie) bekannt ist. Sie besteht aus einer flachen, mit Hohlräumen versehenem Trägerfolie (11), die verschlossen ist mit einer flachen Deckfolie (13), die, gegebenenfalls und bevorzugt, aus demselben Material, z.B. Metall, Glas oder Kunststoff, bevorzugt Kunstoff, besteht. Die Hohlräume stellen Energiespeicherzellen dar, wenn sie mit dem Phasenänderungsmaterial (PCM) (12) gefüllt sind. Die Zellgrößen der Hohlräume werden so gross gewählt, dass genug Material enthalten ist, damit die thermische Zeitkonstante den gewünschten Wert erreicht, wenn sie in Verbindung mit geeignetem Isolierungsmaterial verwendet wird. Andererseits sollten die Zellen klein genug sein, dass einigen Einstiche während dem Einbau oder danach keine bedeutsame Reduktion der Menge des PCM verursachen, um die Wirksamkeit nicht zu reduzieren. Normalerweise erscheint eine Zellgröße, die etwa ein Gramm Phasenänderungsmaterial enthält, optimal, was einer Dimension der Hohlräume von ungefähr einem Zentimeter im Durchmesser und in der Höhe entspricht.

In einem anderen Aspekt stellt die vorliegende Erfindung ein Behältnis gemäß vorliegender Erfindung zur Verfügung, in dem Hohlräume mit einem feuerlöschenden Material gefüllt sind, beispielsweise sind Hohlräume entweder mit einem PCM gefüllt, oder mit einem feuerlöschenden Material, oder mit einem PCM und einem feuerlöschenden Material.

In einem weiteren Aspekt stellt die vorliegende Erfinsdung ein Behältnis gemäß vorliegender Erfindung zur Verfügung, bestehend aus einer einer flachen Deckfolie (24) und einer Trägerfolie mit Hohlräumen (21), die Phasenänderungsmaterial (22) enthalten, und mit Hohlräumen, die feuerlöschendes Material (23) enthalten; z.B. wie in Abbildung 2 gezeigt und beschrieben.

Eine Variation der oben beschriebenen bevorzugten Ausführungsform ist eine energiespeichernde Matte (20), in der Hohlräume, also Zellen, mit dem PCM und andere Hohlräume mit feuerlöschendem Material gefüllt sind, oder Zellen sind mit dem PCM und feurlöschendem Material gefüllt, wie etwa in Abbildung 2 gezeigt. Auch in diesem Fall besteht die Matte aus einer Trägerfolie mit Hohlräumen (21) und einer flachen Deckfolie (24). Feuerverlöschendendes Material ist bekannt und schliesst z.B. Wasser ein. Die Konfiguration der Zellen, die feuerlöschendes Material enthalten, kann mehr oder weniger regelmäßig sein, wobei die besondere Konfiguration der Anordnung mehr oder weniger nicht ausschlaggebend ist, solange das Verhältnis der zwei Füllungen die Anforderungen der Feuerresistenz wirkungsvoll erfüllt. Dies hängt natürlich von den verwendeten Materialien ab. Das feuerlöschende Material muss dabei nicht in separaten Zellen enthalten sein, sondern kann auch mit dem PCM gemischt werden, sofern die beiden Materialien chemisch verträglich sind, und in denselben Zellen eingelagert werden.

Die beiden beschriebenen bevorzugten Ausführungsformen einer energiespeichernden Matte sind passive Bestandteile, was bedeutet, dass die gespeicherte Wärmeenergie von der unmittelbaren Umgebung aufgenommen wird.

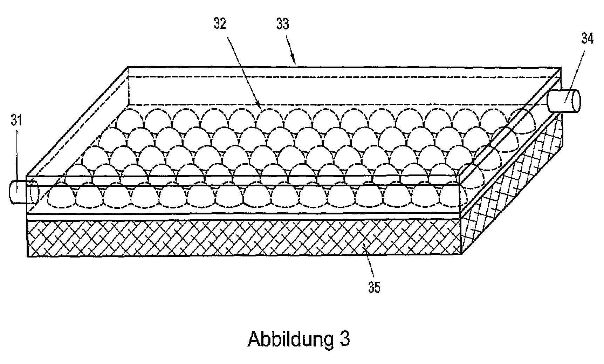

In einem weiteren Aspekt stellt die vorliegende Erfindung ein Behältnis gemäß vorliegender Erfindung zur Verfügung, das, beispielsweise mit Glaswolle oder Steinwolle wärmeisoliert ist, wie z. B.
ein Behältnis gemäß vorliegender Erfindung, das in einer versiegelten Hülle Hohlräume mit einem Phasenänderungsmaterial und gegebenenfalls feuerlöschendem Material enthält, die mit einem integrierten Wärmetauscher umgeben sind, bevorzugt
ein Behältnis gemäß vorliegender Erfindung, das aus einer Isolierschicht (35), auf die eine Trägerfolie mit Hohlräumen, die von einer Hülle (33) umgeben sind und die Phasenänderungsmaterial (32) enthalten, besteht, wobei die Hohlräume mit einem Wärmetauscher, der die Zirkulation eines Wärmeträgers mit einem Wärmeträgerzufluss (31) und einem Wärmeträgerabfluss (34) um die Hohlräume herum ermöglicht, umgeben sind; beispielsweise wie in Abbildung 3 gezeigt und beschrieben.

In einer weiteren bevorzugten Ausführungsform ist eine energiespeichernde Matte (30) mit einen Wärmetauscher- und einer Wärmeisolierungsschicht verbunden, wie etwa in Abbildung 3 beschrieben. In diesem Fall kommt die in den Zellen gespeicherte Wärme direkt von der Wärmeträgerflüssigkeit, die zwischen den Zellen zirkuliert.

Eine solche Konfiguration wird durch Anbringen einer dritte Folie erreicht, die das obere Ende und die Kanten der Hohlräume (Zellen) verschließt. Diese mehrschichtige Hülle (33) ermöglicht, dass die Wärmeträgerflüssigkeit die Zellen, die das PCM (32) enthalten, völlig umströmt. Rohrabschnitte für den Wärmeträgerzu- (31) und -abfluss (34) eignen sich als Verbindung zu den entsprechenden Zufluss- und Abflussrohren. Die ganze Anordnung kann gegebenenfalls auch mit einer Isolierschicht (35) ausgestattet werden. Eine solche energiesparende Matte kann von höchster Bedeutung sein für energieeffiziente Bautechniken, in denen danach gestrebt wird, die ganze Gebäudestruktur als Heiz- beziehungsweise Kühlelemente zu verwenden (Baukernklimatisierung).

Eine große Vielfalt von Materialien kann für die Herstellung solcher energiespeichernden Matten oder Platten verwendet werden, beispielsweise Kunststoff (weich bis hart) oder Metallblech. Letzteres kann für einige Anwendungen, wie z. B. jene mit einem integrierten Wärmetauscher, vorteilhafter sein.

Behältnisse gemäß vorliegender Erfindung sind besonders geeignet als Bauelement beim Neu- oder Umbau von Gebäuden, wie Wohn- oder Wirtschaftsgebäuden. Eine Matte gemäß vorliegender Erfindung kann universell beim Neu- oder Umbau im Holzriegelbau, im Stahlbau, und im Beton- und Ziegelbau eingesetzt werden. Sie ist sowohl für Außen- und Innenwände, für den Boden, die Zwischendecke und auch das Dach geeignet. Eine Matte gemäß vorliegender Erfindung kann wie eine zusätzliche Dämmschicht verwendet und kann auch überall dort eingesetzt werden, wo eine Dämmschicht verbaut wird, wobei es effizienter ist, die Matte auf der Innenseite der Dämmung anzubringen: Wandaufbau (von außen nach innen): Außenmaterial (z.B. Holz, Metall), Dämmstoff (z.B. Steinwolle), PCM-Matte, danach eine Abschlussplatte, z.B. eine Rigipsplatte.

In einem anderen Aspekt stellt die vorliegende Erfindung die Verwendung eines Behältnisses gemäß vorliegender Erfindung
- als Bauelement, z.B. als energieeffizientes Bauelement, oder
- für die Speicherung von Energie
zur Verfügung.

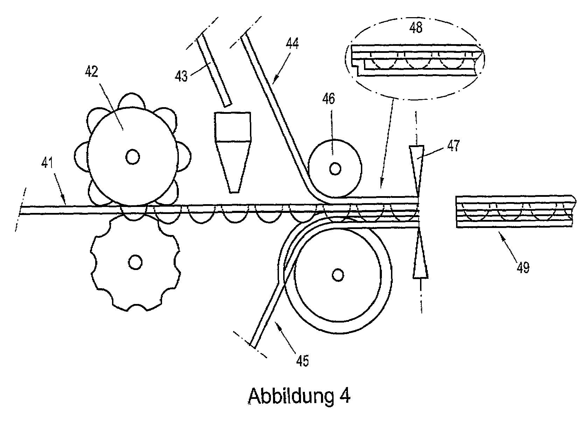

In einem weiteren Aspekt stellt die vorliegende Erfindung ein Verfahren zur Herstellung eines Behältnisses gemäß vorliegender Erfindung zur Verfügung, das dadurch gekennzeichnet ist, daß in eine Trägerschicht mit Hilfe von Eindruckwalzen Hohlräume in der Trägerschicht erzeugt werden und derart hergestellte Hohlräume mit feuerlöschendem Material und/oder Phasenänderungsmaterial gefüllt werden, worauf gegebenenfalls um die Trägerschicht mit den Hohlräumen eine Deckschicht und eine untere Schicht mit Schmelzwalzen aufgebracht wird, das mit Hilfe einer Abschneidevorrichtung in passende Stücke zerteilt wird, wobei das Behältnis gegebenenfalls wärmeisoliert und/oder die Hohlräume gegebenenfalls mit einem Wärmetauscher umgeben werden, beispielsweise ein Verfahren zur Herstellung eines Behältnisses gemäß vorliegender Erfindung, das dadurch gekennzeichnet ist, daß in eine Trägerschicht (41) mit Hilfe von Eindruckwalzen (42) Hohlräume in der Trägerschicht erzeugt werden, die mit Phasenänderungsmaterial (43) gefüllt werden, worauf um die Trägerschicht (41) mit den gefüllten Hohlräumen eine Deckschicht (44) und eine untere Schicht (45) mit geheizten Schmelzwalzen (46) aufgebracht wird, wobei eine dadurch hergestellte, energiespeichernde Matte, mit Hilfe einer Abschneidevorrichtung (47) in passende Stücke zerteilt wird, wobei ein Behältnis (49) mit einem Endquerschnitt (48) entsteht; wie beispielsweise in Abbildung 4 gezeigt und beschrieben.

Ein typisches Herstellungsverfahren (40) für solche energiespeichernden Matten, wie oben beschrieben, wird in Abbildung 4 gezeigt. Eine Trägerschichte (41) wird durch Eindruckwalzen (42) geführt, und die entstandenen Hohlräume (Zellen) werden mit PCM (43) gefüllt. Die gefüllte Trägerschicht wird mit einer Deckschicht (44) und eine unterer Schicht (45) mit Hilfe von geheizten Verschmelzungsrollen (46) zusammengefügt, die die drei plastischen Folien vereinigt und die Kanten entsprechend verschließt, wie im Endquerschnitt (48) gezeigt. Ein Satz von scharfen Klingen (47) schneidet das Endprodukt (49) mit der gewünschter Länge ab.

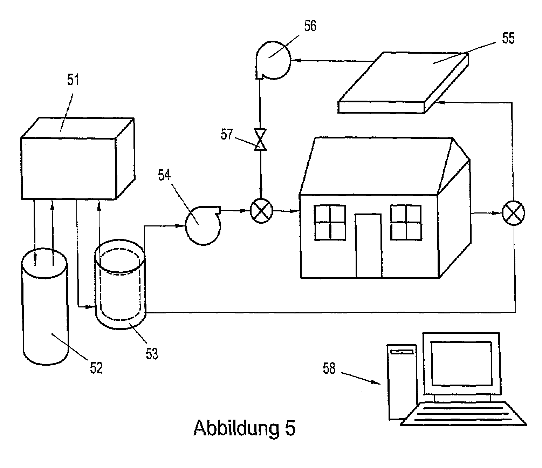

Ein typisches Klimatisierungssystem (Heizung und Kühlung) für den Bau eines energieeffizienten Gebäudes mit Hilfe der beschriebenen energiespeichernden Matten mit integrierten Wärmetauschern, wird schematisch in Abbildung 5 gezeigt. Das energieeffiziente Gebäude (50) verwendet eine geothermische Wärmepumpe (51) als den Hauptenergielieferanten und Solarkollektoren (55) als Hilfsenergiequelle, die normalerweise auf einem Dach montiert sind. Eine in den Boden, z.B. in einen Brunnen, eingesenkte Erdwärmequelle (52) wirkt als Energiereservoir sowohl für die Heizung als auch für die Kühlung. Die Leistung der Wärmepumpe wird mittels Wärmetauscher (53) auf eine Wärmeträgerschleife übertragen. Die Wärmeträgerflüssigkeit wie Salzwasser, Ethylenglykol oder eine Wärmeträgerflüssigkeit mit ähnlichen thermischen Eigenschaften, zirkuliert durch die Schleifen mit Hilfe einer Hauptumlaufpumpe Pumpe (54). Eine solarbetriebene Umlaufpumpe (56) bewirkt das Fließen der Wärmeträgerflüssigkeit von den Solarkollektoren (55), das, je nach der Verfügbarkeit der Sonnenwärme, von einem Solarabsperrventil (57) ein und ausgeschalten wird. Ein Steuercomputer (58) verarbeitet die Information von internen und externen Sensoren, und stellt die verschieden Funktionen optimal aufeinander ein. Diese Anordnung ermöglicht auch eine entfernte Systemüberwachung, eine Umprogrammierung und andere Systemanpassungen.

In einem weitem Aspekt stellt die vorliegende Erfindung ein Wohn- oder industrielles Gebäude, das, z.B. in einer Boden-, Dach- oder Wandfläche, ein Behältnis gemäss einem der Ansprüche 1 bis 5 enthält, gegebenenfalls weiterhin enthaltend
- eine, gegebenenfalls computergesteuerte, geothermische Wärmepumpe,
- einen unterirdischen, wenn möglich in Grundwasser befindlichen, Erdwärmetauscher für die Lieferung oder Aufnahme von Wärme von besagter geothermischer Wärmepumpe, die mittels einer Wärmeträgerflüssigkeit mit besagter geothermischen Wärmepumpe verbunden ist, die Wärme liefert oder entzieht,
- eine, gegebenenfalls computergesteuerte elektrisch betriebene Umlaufpumpe für die Zirkulation der Wärmeträgerflüssigkeit, die mittels einem Wärmetauscher mit besagter geothermischen Wärmepumpe verbunden ist; z.B. zur internen Klimatisation des Gebäudes,
- Solarkollektoren für die Einspeicherung von Sonnenenergie,
- eine, gegebenenfalls computergesteuerte, elektrisch betriebenen Solar Umlaufpumpe für die Zirkulation der Wärmeträgerflüssigkeit durch den Solarkollektor.
- ein, gegebenenfalls computergesteuertes, elektrisch betriebenen Steuerventil für das Ein- und Abschalten des Solarkreislaufes der Wärmeträgerflüssigkeit, und/oder
- Sensoren für interne und externe Temperaturen zur Optimierung der Betriebsbedingungen und Maximierung der Effizienz mittels eines Steuercomputers, welches gegebenenfalls auch diagnostische Funktionen durchführt und gegebenenfalls mittels eines Telefonmodems fernprogrammiert werden kann.
   Modifikationen und Änderungen der beschriebenen Ausführungsformen, die den Anforderungen und der Umwelt entsprechen, sind dem Fachmann geläufig. Die vorliegende Erfindung ist daher nicht auf die beschriebenen Beispiele beschränkt, sondern beinhaltet alle möglichen Änderungen und Modifikationen.

### Beschreibung der Zeichnungen

Abbildung 1
   zeigt perspektivisch eine energiespeichernde Matte, die aus einer (flachen) Deckschicht (13) und einer Trägerschicht mit Hohlräumen (11), die latentes wärmeabhängiges energiespeicherndes Phasenänderungsmaterial (12) enthalten, besteht.
Abbildung 2
   zeigt perspektivisch eine energiespeichernde Matte enthaltend feuerlöschendes Material, die aus einer (flachen) Deckfolie (24) und einer Trägerfolie mit Hohlräumen (21), die latentes wärmeabhängiges energiespeicherndes Phasenänderungsmaterial (22) enthalten, und mit Hohlräumen, die feuerlöschendes Material (23) enthalten, besteht.
Abbildung 3
   zeigt perspektivisch eine energiespeichernde Matte mit Wärmetauscher und Isolierschicht, die aus einer Isolierschicht (35) und Hohlräumen, die von einer mehrschichtigen Hülle (33) umgeben sind und die latentes wärmeabhängiges energiespeicherndes Phasenänderungsmaterial (32) enthalten, besteht, wobei die Hohlräume mit einem integrierten
   Wärmetauscher, der die Zirkulation eines Wärmeträgers mit einem Wärmeträgerzufluss (31) und einem Wärmeträgerabfluss (34) um die Hohlräume herum ermöglicht, umgeben sind.
Abbildung 4
   zeigt schematisch einen typischen Herstellungsprozess für eine energiespeichernde Matte, wie jene, die in Abbildung 3 gezeigt ist, wobei in eine Trägerschicht (41) mit Hilfe von Eindruckwalzen (42) Hohlräume in der Trägerschicht erzeugt werden, die mit latentem wärmeabhängigen energiespeichernden Phasenänderungsmaterial (43) gefüllt werden, worauf um die Trägerschicht (41) mit den gefüllten Hohlräumen eine Deckschicht (44) und eine untere Schicht (45) mit geheizten Schmelzwalzen (46) aufgebracht wird und eine dadurch hergestellte, energiespeichernde Matte, wie die, die in Abbildung 3 gezeigt ist, mit Hilfe einer Abschneidevorrichtung (47) in passende Stücke zerteilt wird. Dabei entsteht das Endprodukt (49) mit einem Endquerschnitt (48).
Abbildung 5
   Zeigt schematisch das Konzept eines energieeffizienten Gebäudes, welches
   - eine energiespeichernde Matte, z.B. gemäß einer der Abbildungen 1 bis 4,
   - eine Erdwärmequelle (52) und einer geothermischen Wärmepumpe (51), über die geothermische Wärme über eine Hauptumlaufpumpe (54) und einen Wärmetauscher (53) dem Gebäude zugeführt wird,
      und
   - Sonnenkollektoren (55), über die solare Wärme über eine Solarumlaufpumpe (56), ein Solarabsperrventil (57) und über einen Wärmetauscher (53) dem Gebäude zugeführt wird, enthält wobei die Wärmezufuhr über einen Steuercomputer (58) gesteuert wird.
Abbildung 6
   Matte mit schwarzer Innenfolie die bei einem Wandaufbau im Holzriegelbau verwendet werden kann.
Abbildung 7
   Untere PVC-Folie, in der die Hohlräume einen Schwamm enthalten.
Abbildung 8
   Möglicher Wandaufbau (von außen nach innen): Außenmaterial (z.B. Holz, Metall), Dämmstoff (z.B. Steinwolle), PCM-Matte, danach eine Abschlussplatte, z.B. eine Rigipsplatte.
Abbildung 9
   Die Graphik zeigt den Effekt bei der Passivanwendung (ohne Heizung und ohne Kühlung): Die Temperaturschwankungen zischen niedrigster und höchster Temperatur fallen geringer aus.

Mit dem nachfolgenden Beispiel wird eine besondere Ausführungsform der Erfindung noch näher beschrieben.

### Beispiel

### Matte enthaltend ein Phasenänderungsmaterial

Die Matte besteht aus zwei PVC - Folien, die zusammengeschweißt werden. Dazwischen wird das Phasenänderungsmaterial, welches entweder auf Parafin- oder auf Sojabasis hergestellt wird, in einzelnen Kammern (ca. 2 cm x 3 cm x 2 cm) - die Größe und Höhe der einzelnen Kammern kann bei Bedarf vergrößert oder verkleinert werden - eingeschweißt, wobei sich in jeder Kammer zusätzlich ein Schwamm befindet, welcher das Phasenänderungsmaterial auch in flüssiger Form aufgesaugt hält, damit kein Material bei Beschädigung der Hülle austreten kann.

Die Matte wird in einer Breite von ca. 50 bis 60 cm als Endlosrolle hergestellt, damit diese ähnlich wie eine Tapete verarbeitet werden kann. Die jeweilige Breite wird je nach Anwendungszweck anzupassen sein. Je nach Einsatzbereich und je nach den klimatischen Verhältnissen werden verschiedene Phasenänderungsmaterialien zur Anwendung kommen, da für die verschiedenen Anwendungsbereiche verschiedene Übergangstemperaturen von der festen zur flüssigen Phase zur optimalen Wirkungsweise der Matte führen. Für den Wohnbereich wird diese Temperatur zwischen 20 und 25 °C liegen. Um die Wirkungsweise noch zu verbessern wird auf der Außenseite eine weiße Folie und auf der Innenseite ein schwarze Folie verwendet.

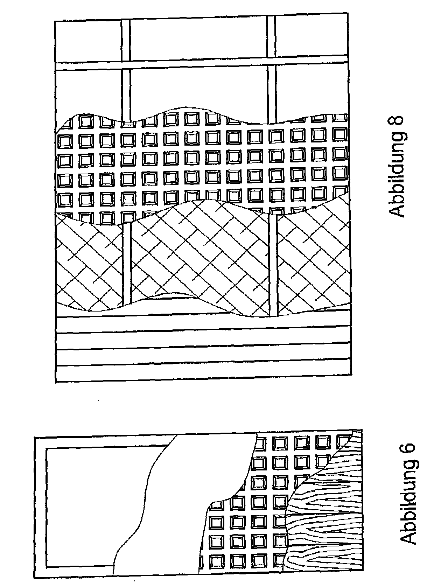

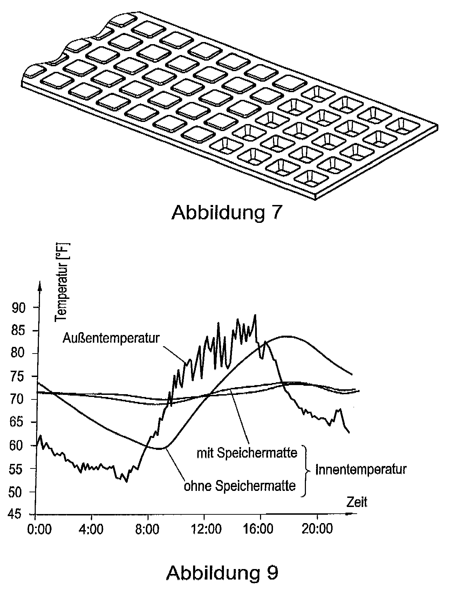

Eine Matte mit schwarzer Innenfolie, die bei einem Wandaufbau im Holzriegelbau verwendet werden kann, ist beispielsweise in Abbildung 6 gezeigt. In Abbildung 7 wird eine untere PVC-Folie, in der die Hohlräume einen Schwamm enthalten, gezeigt.

Die Matte kann sowohl im Holzriegelbau, im Stahlbau und im Beton- und Ziegelbau eingesetzt werden. Sie ist sowohl für Außen- und Innenwände, für den Boden, die Zwischendecke und auch das Dach geeignet. Die Matte wird wie eine zusätzliche Dämmschicht verwendet und kann auch überall dort eingesetzt werden, wo eine Dämmschicht verbaut wird, wobei es effizienter ist, die Matte auf der Innenseite der Dämmung anzubringen: Wandaufbau (von außen nach innen): Außenmaterial (z.B. Holz, Metall), Dämmstoff (z.B. Steinwolle), PCM-Matte, danach eine Abschlussplatte, z.B. eine Rigipsplatte, siehe z.B. Abbildung 8.

Durch den Einbau der PCM-Matte in den Wand- bzw Deckenaufbau verbessert sich das Raumklima dadurch, dass es zu geringeren Temperaturschwankungen zwischen niedrigster und höchster Temperatur kommt und durch die Wärmespeicherung und die Verschiebung der Wärmeaufnahme und Wärmeabgabe kann sowohl bei der Kühlung als auch bei der Heizung massiv Energie eingespart werden.

Funktionsweise: Sobald die Außentemperatur ansteigt, wird diese Wärme an die Außenwand weitergegeben und wird in weiterer Folge auch an den Innenraum abgegeben, der sich dadurch aufheizt. Dies bedeutet: Temperaturanstieg außen = Temperaturanstieg innen. Bei Verwendung der PCM-Matte wird Energie dazu benötigt, den Phasenänderungsstoff vom festen in den flüssigen Aggregatzustand umzuwandeln. Während hier nun auch die Außentemperatur ansteigt, erwärmt sich auch der feste PCM-Stoff bis zu seinem Schmelzpunkt. Nun wird sehr viel Energie dafür verwendet, den Stoff vom festen in den flüssigen Zustand umzuwandeln, ohne dass dabei auch die Temperatur dieses Stoffes ansteigt. Erst nach vollständiger Verflüssigung kann die Temperatur wieder steigen. Dies bewirkt im Innenraum einen viel geringeren Temperaturanstieg als ohne Phasenänderungsmatte. Der umgekehrte Effekt tritt bei Sinken der Außentemperatur ein. Während des Absinkens der Temperatur gibt der Phasenänderungsstoff beim Verfestigen Energie an die Umwelt ab und vermindert dadurch das Auskühlen des Innenraumes.

Dieser Effekt führt bei der Passivanwendung (ohne Heizung und ohne Kühlung) dazu, dass die Temperaturschwankungen zischen niedrigster und höchster Temperatur geringer ausfallen. (siehe z.B. die Grafik in Abbildung 9).

Bei der aktiven Anwendung (Heizung oder Klimaanlage) wird dadurch Energie erspart, dass die Heizung bzw. die Klimaanlage eben diese geringere Temperaturdifferenz ausgleichen muss.

## Patentansprüche

1. Behältnis aus einem Material, das Hohlräume enthält, welche mit einem Phasenänderungsmaterial gefüllt und mit einer Deckschicht verschlossen sind.

2. Behältnis nach Anspruch 1 in der Form einer Luftpolsterfolie, in der den Luftkammern entsprechende Hohlräume mit einem Phasenänderungsmaterial gefüllt und mit einer Deckschicht verschlossen sind.

3. Behältnis nach einem der Ansprüche 1 bis 3, mit einer flachen Deckschicht (13) und einer Trägerschicht mit Hohlräumen (11), die ein Phasenänderungsmaterial (12) enthalten.

4. Behältnis nach einem der Ansprüche 1 bis 4 mit einer flachen Deckfolie (24) und einer Trägerfolie mit Hohlräumen (21), die Phasenänderungsmaterial (22) enthalten, und mit Hohlräumen, die feuerlöschendes Material (23) enthalten,

5. Behältnis nach einem der Ansprüche 1 bis 4 mit einer Isolierschicht (35), auf die eine Trägerfolie mit Hohlräumen, die von einer Hülle (33) umgeben sind und die Phasenänderungsmaterial (32) enthalten, aufgebracht ist, wobei die Hohlräume mit einem Wärmetauscher, der die Zirkulation eines Wärmeträgers mit einem Wärmeträgerzufluss (31) und einem Wärmeträgerabfluss (34) um die Hohlräume herum ermöglicht, umgeben sind.

6. Verwendung eines Behältnisses nach einem der Ansprüche 1 bis 5 als Bauelement.

7. Verwendung eines Behältnisses nach einem der Ansprüche 1 bis 5 für die Speicherung von Energie.

8. Verfahren zur Herstellung eines Behältnisses gemäß einem der Ansprüche 1 bis 5, **dadurch gekennzeichnet, daß** in eine Trägerschicht mit Hilfe von Eindruckwalzen Hohlräume in der Trägerschicht erzeugt werden und derart hergestellte Hohlräume mit feuerlöschendem Material und/oder Phasenänderungsmaterial gefüllt werden, worauf gegebenenfalls um die Trägerschicht mit den Hohlräumen eine Deckschicht und eine untere Schicht mit Schmelzwalzen aufgebracht wird, das mit Hilfe einer Abschneidevorrichtung in passende Stücke zerteilt wird, wobei das Behältnis gegebenenfalls wärmeisoliert und/oder die Hohlräume gegebenenfalls mit einem Wärmetauscher umgeben werden.

9. Verfahren zur Herstellung eines Behältnisses gemäß Anspruch 8, **dadurch gekennzeichnet, daß** in eine Trägerschicht (41) mit Hilfe von Eindruckwalzen (42) Hohlräume in der Trägerschicht erzeugt werden, die mit Phasenänderungsmaterial (43) gefüllt werden, worauf um die Trägerschicht (41) mit den gefüllten Hohlräumen eine Deckschicht (44) und eine untere Schicht (45) mit geheizten Schmelzwalzen (46) aufgebracht wird, wobei eine dadurch hergestellte, energiespeichernde Matte, mit Hilfe einer Abschneidevorrichtung (47) in passende Stücke zerteilt wird, wobei ein Behältnis (49) mit einem Endquerschnitt (48) entsteht.

10. Wohn- oder industrielles Gebäude, das ein Behältnis gemäss einem der Ansprüche 1 bis 5 enthält, gegebenenfalls weiterhin enthaltend
- eine, gegebenenfalls computergesteuerte, geothermische Wärmepumpe,
- einen unterirdischen, wenn möglich in Grundwasser befindlichen, Erdwärmetauscher für die Lieferung oder Aufnahme von Wärme von besagter geothermischer Wärmepumpe, die mittels einer Wärmeträgerflüssigkeit mit besagter geothermischen Wärmepumpe verbunden ist, die Wärme liefert oder entzieht,
- eine, gegebenenfalls computergesteuerte elektrisch betriebene Umlaufpumpe für die Zirkulation der Wärmeträgerflüssigkeit, die mittels einem Wärmetauscher mit besagter geothermischen Wärmepumpe verbunden ist; z.B. zur internen Klimatisation des Gebäudes,
- Solarkollektoren für die Einspeicherung von Sonnenenergie, und/oder
- eine, gegebenenfalls computergesteuerte, elektrisch betriebenen Solar Umlaufpumpe für die Zirkulation der Wärmeträgerflüssigkeit durch den Solarkollektor.
- ein, gegebenenfalls computergesteuertes, elektrisch betriebenen Steuerventil für das Ein- und Abschalten des Solarkreislaufes der Wärmeträgerflüssigkeit,
- Sensoren für interne und externe Temperaturen zur Optimierung der Betriebsbedingungen und Maximierung der Effizienz mittels eines Steuercomputers, welches gegebenenfalls auch diagnostische Funktionen durchführt und gegebenenfalls mittels eines Telefonmodems fernprogrammiert werden kann.
